# EUROPÄISCHE PATENTSCHRIFT

(11) **EP 0 610 489 B1**
(45) Veröffentlichungstag und Bekanntmachung des Hinweises auf die Patenterteilung: **30.07.1997**
(21) Anmeldenummer: 93919280.3
(22) Anmeldetag: 06.09.1993
(51) Int. Cl.: B65D 6/12, B65D 6/22, B65D 19/12

(54) **MEHRWEG-TRANSPORTBEHÄLTER**
REUSABLE TRANSPORT CONTAINER
RECIPIENT DE TRANSPORT REUTILISABLE

(30) Priorität: 10.09.1992 DE 4230027; 28.10.1992 DE 9214567 U
(43) Veröffentlichungstag der Anmeldung: 17.08.1994
(73) Patentinhaber: MAUSER-WERKE GmbH, D-50321 Brühl (DE)
(72) Erfinder: BURGDORF, Märten, D-53913 Swisttal (DE)
(86) Internationale Anmeldenummer: EP9302407
(87) Internationale Veröffentlichungsnummer: WO9405554

(56) Entgegenhaltungen:
- CH-A- 63 722
- DE-A- 2 442 322
- FR-A- 2 413 274
- GB-A- 2 245 883
- US-A- 954 676
- SOVIET INVENTIONS ILLUSTRA- TED, P,Q Sektion, Woche 8420, 27 Juni 1984 DERWENT PUBLICATIONS, LTD., London, SU-A-1036-625 (POPOR)

## Beschreibung

Die Erfindung betrifft einen Mehrweg-Transportbehälter aus thermoplastischem Kunststoff, der von einer Bedienungsperson von Hand tragbar ist, in geschlossener, zusammenklappbarer bzw. zusammenfaltbarer Kastenform (Rechteckbauweise) mit einem oberen hälftig geteilten Behälterdeckel und mit einem unteren, an der Bodenplatte umlaufenden Rahmenteil, an welchem wenigstens zwei sich gegenüberliegende Seitenwandungen verschwenkbar angelenkt bzw. mittels Scharnieren befestigt sind.

Ein derartiger zusammenklappbarer Mehrweg-Transportbehälter ist aus der Zeitschrift "Neue Verpackung" 6/92, S. 32 bekannt.

Die nachstehende Erfindung betrifft einen neuartigen Mehrweg-Transportbehälter für ein Logistik-System, das u. a. auch der Versorgung des Einzelhandels bzw. Selbstbedienungs-Ladenketten dienen soll und mit welchem die Verkaufsgüter direkt aus der Umverpackung - die bisher aus nicht wiederverwertbaren Pappkartons besteht-in die Verkaufsregale eingelagert werden können.

Nachteil der bisher bekannten Behälter ist es, daß die Waren nicht en bloc sondern einzeln von Hand aus dem Behälter entnommen und sehr zeitaufwendig in das Verkaufsregal eingestapelt werden müssen. Bei Pappkarton-Umverpackungen ist es - insbesondere in Selbstbedienungsläden - weiterhin teilweise üblich, die Pappkartons direkt in die Regale einzustellen und den Verpackungsinhalt den Kunden durch Abschneiden des Kartondeckels oder Herausschneiden einer Seitenwandung zugänglich zu machen. Eine vergleichsweise Handhabung ohne Auspacken der einzelnen Waren ist von einem weiteren Transportbehältersystem bekannt. Dabei besteht der dafür vorgesehene Transportbehälter aus drei separaten Einzelteilen, nämlich einem schalenförmigen Unterboden, einem mittleren umlaufenden zusammenfaltbaren Wandungsteil und einem gleichen schalenförmigen Oberboden, die zum Zwecke des Warentransportes ineinandergesteckt und mit Hilfe von äußeren Haltebändern zusammengehalten werden.
Zur Wareneinlagerung der Verkaufsgüter werden die Haltebänder, der Oberboden und das faltbare Wandungsteil entfernt und die Waren mitsamt dem schalenförmigen Unterboden (Tray) in das Regal eingestellt.

Aus Stabilitätsgründen sind die Wandungen von Kunststoffbehältern dicker als z.B. von Pappkartons ausgebildet und zudem zur Stabilitätsverbesserung meistens mit Verrippungen versehen. Bei Einstapelung von Kunststoffbehältern als Lagerbehälter direkt in die Regale von Verkaufsläden geht ein erheblicher Teil von wertvoller Verkaufsfläche als Lagerfläche für die abgestellten Kunststoffbehälter verloren. Bei z.B. frontseitig zugänglichen Behältern sind die einzelnen Waren von dem Kunden nur vergleichsweise schlecht greifbar und nur nach vorne aus dem Umbehälter zu entnehmen. Außerdem wird durch die zeitliche Bindung der Transportbehälter als Lagerbehälter in den Verkaufsregalen eine Vielzahl der Behälter aus dem Verkehr gezogen und eine entsprechende zusätzliche Menge an Kunststoffbehältern ist für den Transportzweck erforderlich. Dies bedingt einen wesentlich höheren Investitionsaufwand mit Kapitalbindung durch die Lagerungs-Totzeiten.
Bei dem bekannten dreiteiligen Transport-Lagerungsbehälter ist es ebenfalls nachteilig, daß wegen des relativ dicken Trays (Unterbodenschale) ca. 15 % mehr kostbarer Platz im Verkaufsregal benötigt wird bzw. als Verkaufsfläche verloren geht. Ein weiterer Nachteil dieses Behälters ist es, daß er aus mehreren separaten Einzelteilen besteht, die voneinander getrennt werden, weil davon immer ein Teil (nämlich die Unterbodenschale) für längere Zeit im Regal verbleiben muß, während die anderen Teile vorab wieder in den Behälterkreislauf zurückgegeben werden.

Es ist Aufgabe der vorliegenden Erfindung, einen Mehrweg-Transportbehälter, der von einer Bedienungsperson auch im beladenen Zustand von Hand tragbar ist, zu schaffen, der ein einfaches Entleeren der Verkaufsgüter direkt in die Verkaufsregale gestattet und der danach sofort als zusammengefaltete Leergut-Einheit wieder in den Behälterkreislauf zurückgegeben werden kann. Darüber hinaus soll ein nachteiliger Platzverbrauch im Verkaufsregal, z. B. durch aufwendige seitlich überstehende Unterbodenschalen vermieden werden.
Diese Aufgabe wird mit dem erfindungsgemäßen Mehrweg-Transportbehälter dadurch gelöst, daß die Bodenplatte als separates Einzelteil ausgebildet und im unteren Rahmenteil verschiebbar und vollständig herausziehbar geführt ist, wobei die Bodenplatte auf der der zuerst einschiebbaren Querkante gegenüberliegenden Seite mit einer flanschrandförmigen Griffleiste versehen ist. Durch Ergreifen der Griffleiste und Herausziehen der Bodenplatte wird der kurzzeitig in das Verkaufsregal eingestellte Transportbehälter unten geöffnet, danach wird der Behälter als einteilige Verpackungseinheit nach oben von dem Füllgut-Stapel abgehoben, zusammengefaltet und sofort in den Behälterkreislauf zurückgegeben. Auf diese besonders aufwand- und zeitsparende Weise wird somit der Inhalt des Mehrweg-Transportbehälters einfach, schnell und direkt in die Verkaufsregale entleert bzw. entladen und eingelagert. Die Verkaufsgüter sind danach gut zugänglich und kundenfreundlich aus dem Regal zu entnehmen, und es geht keine Regalfläche als Lagerfläche für die Umbehälter verloren.

Wenn z. B. aufgrund von Platzmangel im Regal (unzureichende Höhe) der Transportbehälter nicht nach oben von dem Verkaufsgut-Paket abgehoben werden kann, ist es weiterhin möglich, den Mehrweg-Transportbehälter bzw. das Verkaufsgut-Paket zunächst auf ein einfaches separates dünnes Tray als Hilfsmittel abzusetzen und dieses dann zusammen mit dem Warenpaket in das Verkaufsregal einzuschieben.

Zweckmäßigerweise besteht das Tray z. B. aus Kunststoff oder dünnem Stahlblech und ist nicht oder nur ganz geringfügig breiter als die herausziehbare Bodenplatte des Transportbehälters. Gegenüber der heutigen Praxis ist dann ein Mehrbedarf an Regalfläche nicht erforderlich. Die Transportbehälter werden nicht als teure kapitalbindende Lagerbehälter festgehalten und gelangen sofort wieder in den Logistik-Kreislauf zurück.

Aus der Druckschrift SU-A-1036625 ist zwar bereits ein kastenförmiger Behälter mit zusammenhängenden Seitenwandungen, mit einer oberen Deckelplatte und mit einer unteren Bodenplatte bekannt. Die Seitenwandungen sind in den Eckbereichen, in denen sie sich berühren, wechselweise mit einem von innen oder einem von außen aufgeklebten Klebebandstreifen miteinander verbunden, so daß sich zwei innere Klebebandstreifen und zwei äußere Klebebandstreifen in zwei Eckbereichen jeweils diametral gegenüberliegen. Die Deckelplatte und die Bodenplatte sind baugleich und weisen an ihren langen Außenkanten jeweils einen unter einem Winkel von 45° nach innen geneigten schienenartigen Vorsprung auf, der in eine entsprechende, ebenfalls um 45° schräggestellte Längsnut in den Seitenkanten der beiden längeren Seitenwandungen des Behälters eingreifen kann. Zum Zusammenfalten des Behälters werden Deckelplatte und Bodenplatte vollständig aus den Längsnuten der Seitenwandungen herausgezogen, und die mittels Klebeband aneinanderhängenden Seitenwandungen können in Vertikalebene flach zusammengefaltet bzw. aufeinandergeklappt werden. Das Zusammenklappen kann allerdings nur in einer ganz bestimmten vorgegebenen Art derart erfolgen, daß die innenseitigen Klebebandstreifen zwischen zwei zueinander hingeklappten Seitenwandungen und die außenseitigen Klebebandstreifen auf zwei voneinander weggeklappten Seitenwandungen angeordnet sind. Ein Zusammenfalten in anderer Art und Weise hätte unweigerlich ein Überdehnen und Aufreißen der Klebebandstreifen zur Folge. Aufgrund der unzureichenden Stabilität ist dieser Faltbehälter jedoch für eine Verwendung als Mehrweg-Transportbehälter völlig ungeeignet.

Zweckmäßigerweise ist die Bodenplatte an ihrer hinteren Querkante bzw. an der zuerst einzuschiebenden (dann) vorderen Querkante flach abgeschrägt ausgebildet, um beim Herausziehen der Bodenplatte ein ruckfreies Herabgleiten der Ware zu gewährleisten. Die Oberfläche der Bodenplatte ist hierfür glatt und nicht rutschhemmend ausgebildet.

Weiterhin ist es vorteilhaft, den Boden des Transportbehälters in eingeschobenem Zustand gegen ungewolltes Herausrutschen durch eine geeignete Verriegelung zu sichern. Dazu ist vorgesehen, daß die herausziehbare Bodenplatte mittels lösbarer Befestigungsmittel, wie z.B. Rastnocken, Klinkhaken, Federstiften o.ä. gegen unbeabsichtigtes Herausrutschen aus dem Rahmenteil arretierbar ist. Somit kann ein Herausziehen der Bodenplatte dann nur noch nach gewollter Entriegelung erfolgen. Die Arretierung der Bodenplatte in dem unteren Rahmenteil könnte beispielsweise auch durch Rastnocken oder Riffeln (Rillen) auf den Kontaktflächen der Schienen/Nuten realisiert werden, wobei die Rastnocken (Rillen) durch die Gewichtskräfte des Behälterinhaltes ineinandergreifen und ein Herausrutschen der Bodenplatte verhindern. Nach Aufsetzen auf ein entsprechendes Tray wird die Bodenplatte leicht angehoben und die ineinandergreifende Riffelung gelöst.

In Ausgestaltung der Erfindung ist weiterhin vorgesehen, daß die herausziehbare Bodenplatte oder/und der obere Behälterdeckel gegen unbefugtes Öffnen mittels entsprechender Plombierungsmittel wie z.B. Klebefolie (aufklebbares Siegelband), Plombier-Spreizstifte oder ähnlichem abschließbar bzw. plombierbar ist, um den Behälterinhalt durch Originalitätsversiegelung gegen eine Entnahme durch unberechtigte Personen zu sichern.

In konstruktiver Ausgestaltung ist vorgesehen, daß innenseitig in dem Rahmenteil zwei gegenüberliegende Schienen bzw. Längsnuten angeordnet sind, in welchen die Bodenplatte seitlich mit ihren entsprechend angepaßten Außenkanten verschiebbar geführt ist.
Gegenüber dieser Innenführung kann z.B. aus fertigungstechnischen Gründen auch eine Außenführung zweckmäßig sein, bei der das Rahmenteil an den langen Seiten außenseitig zwei Schienen bzw. Längsnuten aufweist und an der Bodenplatte an den entsprechenden Außenkanten jeweils ein L-förmiger Flanschrand ausgebildet ist, wobei der nach innen weisende Schenkel des L-förmigen Flanschrandes über die jeweilige Schiene des Rahmenteils bzw. in deren Längsnut von außen eingreift und die Bodenplatte somit verschiebbar geführt ist.

Weiterhin ist vorgesehen, daß auf der Unterseite des Rahmenteiles 14, vorzugsweise in der hinteren,der Bodenplatten-Stirnkante zugeordneten Querleiste, eine Ausnehmung wie z.B. eine querverlaufende nur nach unten offene Nut (Schlitz/Spalt) ausgebildet ist, in welche ein entsprechend schmaler hochstehender Flanschrand eines untergestellten dünnen Trays (Tragetablett) eingereifen kann. Die Ausnehmung könnte auch durch mehrere Bohrungen und mit entsprechend vorstehenden Arretierungs-Rastnoppen auf dem Tray als formschlüssig eingreifbare Vorsprünge realisiert werden.
Durch diese einfache Maßnahme wird erreicht, daß der auf das Tray aufgestellte Transportbehälter in Längs- und Querrichtung auf dem Tray sicher fixiert ist und beim Herausziehen der Bodenplatte bzw. Entladen des Behälters kein gegenseitiges Verrutschen erfolgen kann.
Das untergestellte Tray ist zweckmäßigerweise gleich breit bzw. nur geringfügig breiter als die herausziehbare Bodenplatte.
Dadurch wird verhindert, daß zwischen den in die Regalfächer eingestapelten Warenpaketen große Freiabstände bestehen bleiben und wertvolle Regalfläche verlorengeht.
Gegenüber bisher bekannten Mehrweg-Transportsystemen wird also mit der Anwendung des erfindungsgemäß ausgebildeten Transportbehälters eine um ca. 15 % bessere Regalflächenausnutzung erreicht.

Die Erfindung wird nachfolgend anhand von in den Zeichnungen dargestellten Ausführungsbeispielen näher erläutert und beschrieben.
Es zeigen:
- Figur 1: einen ersten erfindungsgemäßen Mehrweg-Transportbehälter mit herausziehbarer Bodenplatte,
- Figur 2: einen zweiten erfindungsgemäßen Mehrweg-Transportbehälter,
- Figur 3: das untere Rahmenteil und die herausgezogene Bodenplatte des Transportbehälters aus Fig. 2,
- Figur 4: einen Teilquerschnitt durch das Rahmenteil mit Bodenplatte aus Fig. 3 und
- Figur 5: eine weitere mögliche Ausgestaltungsform eines erfindungsgemäßen Mehrweg-Transportbehälters.

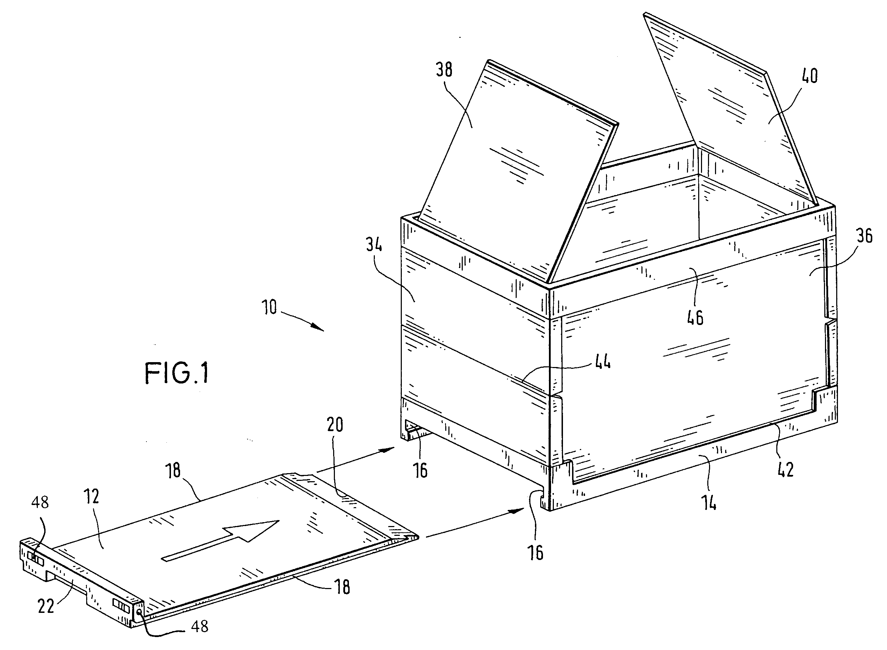

In Figur 1 ist mit der Bezugsziffer 10 ein Mehrweg-Transportbehälter bezeichnet, der in rechteckförmiger Kastenbauweise zwei schmale Stirnwandungen 34 und zwei längere Seitenwandungen 36, zwei obere Deckelhälften 38,40 und als Behälterunterboden ein unteres umlaufendes Rahmenteil 14 mit vollständig herausziehbarer Bodenplatte 12 aufweist.

Zum Zusammenfalten des leeren Transportbehälters 10 werden zuerst die beiden langen Seitenwandungen 36, die nur unten über ein Scharnier 42 mit dem Rahmenteil 14 verbunden sind, nach innen übereinander eingeklappt, danach können die beiden schmaleren Stirnwandungen 34, die in der Mitte z.B. ein Filmscharnier 44 aufweisen und oben und unten verschwenkbar befestigt sind, gleichfalls nach innen eingefaltet werden. Dabei senkt sich der Deckel 38,40 mitsamt dem umlaufenden oberen Rahmenteil 46 auf den Boden herab, und der Transportbehälter 10 nimmt dann in eingefaltetem Zustand nur noch etwa 25 % seines ursprünglichen Behältervolumens ein.

Die herausziehbare Bodenplatte 12 ist mit ihren beiden langen Außenkanten 18 in zwei sich gegenüberliegenden, innenseitig in dem Rahmenteil 14 angeordneten Längsnuten 16 verschiebbar geführt.
Um ein Herunterpurzeln des Behälterinhaltes beim Entleeren bzw. Herausziehen der Bodenplatte 12 zu vermeiden, ist zweckmäßigerweise die zuerst einzuschiebende vordere (bzw. beim Herausziehen die hintere) Querkante 20 der Bodenplatte 12 stark abgeschrägt bzw. abgeflacht ausgebildet.

Die Bodenplatte 12 ist auf der der Querkante 20 gegenüberliegenden Außenseite mit einer flanschartigen Griffleiste 22 versehen. Gleichzeitig dient die Griffleiste 22 als Anschlagsleiste für die vollständig eingeschobene Bodenplatte 12. Seitlich in der Griffleiste 22 sind Verriegelungseinrichtungen 48, z.B. durch Federkraft nach außen vorspringende Einrastzapfen, zum Verriegeln (Fixieren) der ausziehbaren Bodenplatte 12 in dem Rahmenteil 14 angeordnet.

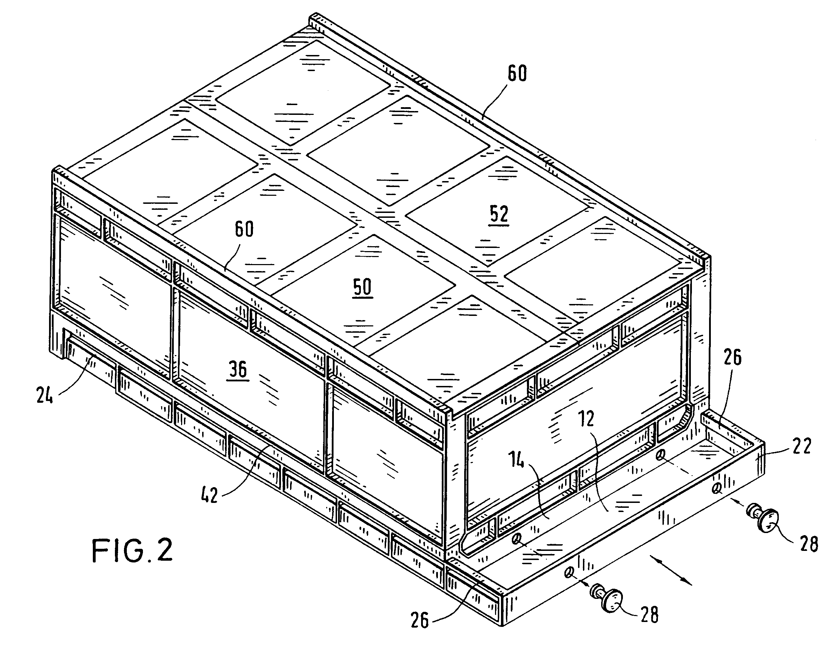

In Figur 2 ist ein anderer Kunststoffbehälter in stabiler Klappbox-Ausführung dargestellt. Die einzelnen Wandungsteile sind mittels Verrippung verstärkt ausgebildet. Die langen Seitenwandungen 36 sind jeweils unten mittels Scharnieren 42 an dem unteren Rahmenteil 14 befestigt, und die Deckelhälften 50,52 sind hier an dem oberen Rand der langen Seitenwandungen 36 mittels eines um 270° umschwenkbaren Klavierband-Scharniers angelenkt.

Die kurzen Seitenwandungen werden hierbei zuerst nach innen eingeklappt. Hier sind die Scharniere der kurzen Seitenwandungen um ein Stück (= Dicke der Seitenwandung) tiefer angeordnet als die Scharniere der langen Seitenwandungen. Die beiden Deckelhälften weisen ca. die gleichen Abmessungen wie die langen Seitenwandungen auf und werden zuerst um 270° nach außen auf die Seitenwandungen und dann zusammen mit den Seitenwandungen um 90° nach innen eingeklappt.

Das Rahmenteil 14 weist an seinen beiden langen Seiten außenseitig jeweils eine Längsnut 24 auf. Dementsprechend sind an den beiden langen Außenkanten der Bodenplatte 12 jeweils L-förmige Flanschränder 26 ausgebildet, deren nach innen weisender Schenkel über die ausgebildete Schiene bzw. in die Längsnut 24 des Rahmenteiles 14 eingreift und somit die Bodenplatte 12 verschiebbar bzw. vollständig herausziehbar geführt ist.

Zum Plombieren des Transportbehälters gegen unbefugtes Öffnen (= Originalitätsversiegelung) sind in der Flanschrand-Griffleiste 22 der Bodenplatte 12 wie auch in dem überdeckten Rand des unteren Rahmenteiles 14 jeweils fluchtende Bohrungen angeordnet, in welche Plombier-Spreizstifte 28 einsetzbar sind. Die Plombier-Spreizstifte 28 sind nur durch Abreißen oder Abschneiden zu entfernen.

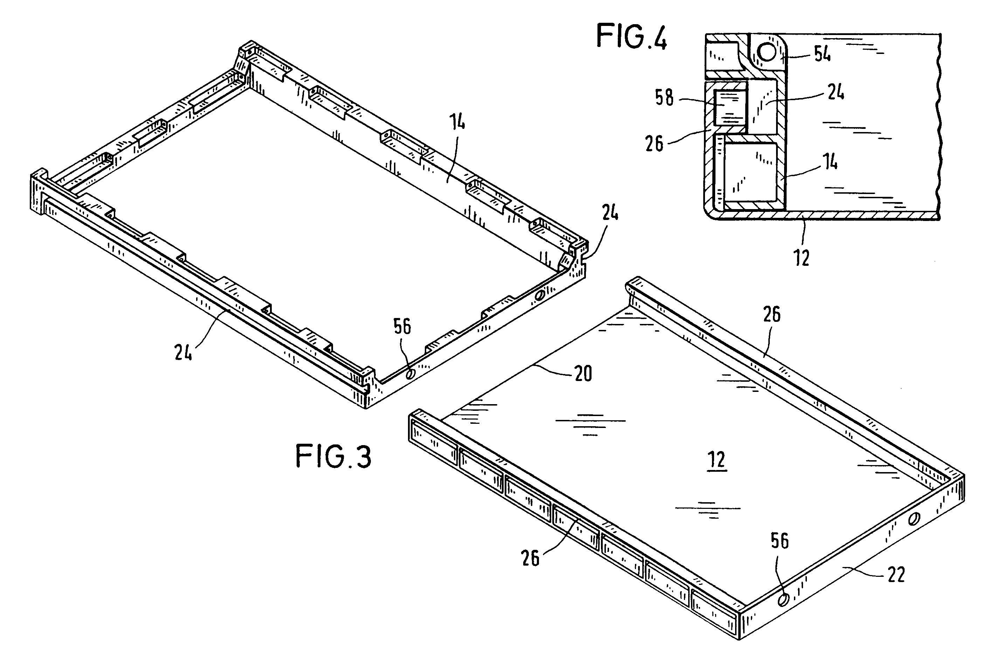

In Figur 3 sind noch einmal das untere Rahmenteil 14 (mit entfernten Seitenwandungen) und die herausgezogene Bodenplatte 12 dargestellt. Im Rahmenteil 14 sind innenseitig am oberen Rand die Scharnieraussparungen 54 zum Eingreifen der entsprechenden Scharniervorsprünge der verschwenkbaren Seitenwandungen erkennbar. In der vorderen Griffleiste 22 der Bodenplatte 12 und in der vorderen Rahmenleiste des unteren Rahmenteiles 14 sind die Bohrungen 56 zum Einsetzen der Plombier-Spreizstifte 28 angeordnet. Als Plombiermittel könnten aber auch beliebige andere Maßnahmen wie Drahtverplombungen, Klebefolien oder ähnliches angewendet werden.

Figur 4 zeigt in Schnittdarstellung die in das Rahmenteil 14 eingeschobene Bodenplatte 12. Dabei wird die Bodenplatte 12 mit ihrem äußeren L-förmigen Flanschrand 26 in der außenseitigen Längsnut 24 des Rahmenteiles 14 geführt.
Aus Stabilitätsgründen kann der nach innen weisende Schenkel des L-förmigen Flanschrandes doppelt mit rechtwinkelig dazwischen verlaufenden Verstärkungsrippen 58 ausgeführt sein.

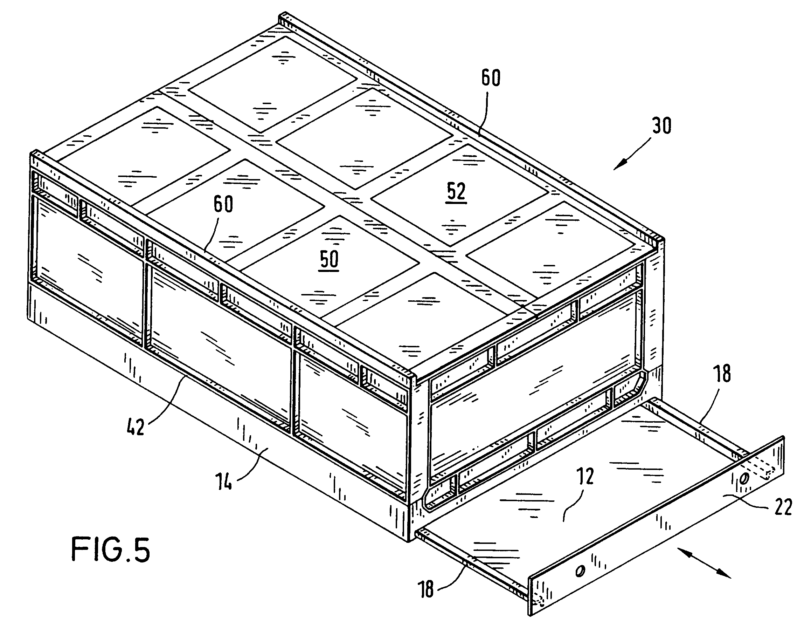

Schließlich ist in Figur 5 eine Abwandlung des erfindungsgemäßen zusammenklappbaren Transportbehälters aus Fig. 2 dargestellt. Hierbei ist die Konstruktion im wesentlichen gleich. Lediglich die herausziehbare Bodenplatte 12 ist hier entsprechend der Ausführung in Fig. 1 mit einer Innenführung in dem Rahmenteil 14 versehen. Rechts und links oben auf den langen Außenseiten der um 270° umklappbaren Deckelhälften 50,52 sind die hochstehenden Scharnierleiten 60 erkennbar.
Diese dienen bei einer Übereinanderstapelung derartiger Behälter als Verrutschsicherung und greifen formschlüssig in entsprechende Aussparungen auf der Unterseite des Rahmenteiles 14 ein.

## Patentansprüche

1. Mehrweg-Transportbehälter (10, 30) aus thermoplastischem Kunststoff, der von einer Bedienungsperson von Hand tragbar ist, in geschlossener, zusammenklappbarer bzw. zusammenfaltbarer Kastenform (Rechteckbauweise) mit einem oberen hälftig geteilten Behälterdeckel (38, 49; 50, 52) und mit einem unteren, an der Bodenplatte (12) umlaufenden Rahmenteil (14), an welchem wenigstens zwei sich gegenüberliegende Seitenwandungen (36) verschwenkbar angelenkt sind,
**dadurch gekennzeichnet**, daß
die Bodenplatte (12) als separates Einzelteil ausgebildet und in dem Rahmenteil (14) verschiebbar und vollständig herausziehbar geführt ist, wobei die Bodenplatte (12) auf der der zuerst einschiebbaren Querkante (20) gegenüberliegenden Seite mit einer flanschrandförmigen Griffleiste (22) versehen ist.

2. Transportbehälter nach Anspruch 1,
**dadurch gekennzeichnet,** daß innenseitig in dem Rahmenteil (14) zwei gegenüberliegende Schienen bzw. Längsnuten (16) angeordnet sind, zwischen welchen die Bodenplatte (12) mit ihren entsprechenden Außenkanten (18) verschiebbar geführt ist.

3. Transportbehälter nach Anspruch 1,
**dadurch gekennzeichnet**, daß das Rahmenteil (14) an zwei gegenüberliegenden Seiten außenseitig zwei Schienen bzw. Längsnuten (24) aufweist und an der Bodenplatte (12) an den entsprechenden Außenkanten (18) jeweils ein L-förmiger Flanschrand (26) angeordnet ist, wobei ein nach innen weisender Schenkel des L-förmigen Flanschrandes (26) über die jeweilige Schiene bzw. in die Längsnut (24) eingreift und die Bodenplatte (12) somit verschiebbar geführt ist.

4. Transportbehälter nach Anspruch 1, 2 oder 3,
**dadurch gekennzeichnet**, daß die zuerst einzuschiebende bzw. vordere Querkante (20) der Bodenplatte (12) abgeschrägt bzw. abgeflacht ausgebildet ist.

5. Transportbehälter nach einem der Ansprüche 1-4,
**dadurch gekennzeichnet,** daß die herausziehbare Bodenplatte (12) mittels betätigbarer Verriegelungsmittel bzw. lösbarer Befestigungsmittel, wie z.B. Rastnocken, Klinkhaken, Federstiften o.ä. gegen unbeabsichtigtes Herausrutschen aus dem Rahmenteil (14) arretierbar ist.

6. Transportbehälter nach einem der Ansprüche 1 bis 5,
**dadurch gekennzeichnet**, daß die herausziehbare Bodenplatte (12) oder/und der obere Behälterdeckel gegen unbefugtes Öffnen mittels entsprechender Plombierungsmittel wie z.B. Plombier-Spreizstiften (28), aufklebbarem Siegelband oder ähnlichem abschließbar bzw. plombierbar ist/sind.

7. Transportbehälter nach einem der Ansprüche 1 bis 6,
**dadurch gekennzeichnet**, daß auf der Unterseite des Rahmenteiles (14) wenigstens eine Ausnehmung wie z.B. eine querverlaufende Nut oder Bohrungen, in welche entsprechende Vorsprünge wie z.B. ein schmaler hochstehender Flanschrand (Rastschiene) oder Rastnocken (Eingreifzapfen) eines untergestellten dünnen Trays (Tragetablett) zur Längs- und Querfixierung des aufgestellten Transportbehälters (10) formschlüssig eingreifen können, vorgesehen sind.

## Claims

1. A re-usable transport container (10, 30) of thermoplastic plastics material, which can be carried manually by an operator, in the form of a closed, collapsible or foldable box (rectangular design) with an upper cover (38, 49; 50, 52) divided in half and with a lower frame part (14) which extends continuously on the base plate (12) and to which at least two opposed side walls (36) are articulated, **characterized in that** the base plate (12) is constructed as a separate component and is slidably displaceable in the frame part (14) and completely withdrawable, wherein the base plate (12) is provided with a gripping strip (22) in the form of a flanged edge on the side opposite the initially insertable transverse edge (20).

2. A transport container according to Claim 1, **characterized in that** two opposite rails or longitudinal grooves (16), between which the base plate (12) is slidably displaceable by means of the corresponding outer edges (18) thereof, are arranged on the inside of the frame part (14).

3. A transport container according to Claim 1, **characterized in that** the frame part (14) is provided on the outside with two rails or longitudinal grooves (24) on two opposite sides, and one respective L-shaped flanged edge (26) is arranged on each of the corresponding outer edges (18) on the base plate (12), wherein an inwardly directed arm of the L-shaped flanged edge (26) engages over the respective rail and into the longitudinal groove (24) and the base plate (12) is thus slidably displaceable.

4. A transport container according to Claim 1, 2 or 3, **characterized in that** the transverse edge to be inserted first or the front transverse edge (20) of the base plate (12) is chamfered or flattened.

5. A transport container according to one of Claims 1 to 4, **characterized in that** the withdrawable base plate (12) can be locked by means of actuable locking means or releasable fastening means, such as for example catching cams, ratchets, spring-loaded pins or the like, so as to prevent it from inadvertently slipping out of the frame part (14).

6. A transport container according to one of Claims 1 to 5, **characterized in that** the withdrawable base plate (12) and/or the upper container cover can be closed off or sealed by means of suitable sealing means, such as for example sealing spreading pins (28), adhesive sealing tape or the like, to prevented unauthorized opening.

7. A transport container according to one of Claims 1 to 6, **characterized in that** the underside of the frame part (14) is provided with at least one recess, such as for example a transversely extending groove or bores, into which corresponding projections, such as for example a narrow upright flanged edge (catching rail) or catching cams (engagement pins) of a thin tray (support tablet) positioned thereunder, can engage with positive locking in order to fix longitudinally and transversely the transport container (10) placed thereon.

## Revendications

1. Récipient de transport réutilisable (10), (30) en matière synthétique thermoplastique, portable à la main par le personnel de service, ayant une forme de caisse fermée pliable (de construction rectangulaire), et, comportant un couvercle supérieur (38,49; 50,52) divisé en deux moitiés et un cadre inférieur (14) continu sur tout le pourtour de la plaque de fond (12), sur lequel sont articulées au moins deux parois latérales (36) se faisant face, *caractérisé en ce que* la plaque de fond (12), constituée d'une pièce séparée, est déplaçable par glissement dans le cadre (14) dont elle peut être retirée complètement, et, comporte une baguette de maniement en forme d'un rebord de saisie (22) prévu sur le côté opposé à son chant perpendiculaire (20) à engager en premier.

2. Récipient de transport selon la revendication 1, *caractérisé en ce que* dans la face intérieure du cadre (14) sont ménagés deux rails, respectivement rainures longitudinales de guidage (16) se faisant face, dans lesquels la plaque de fond (12) est déplaçable par ses chants extérieurs correspondants (18).

3. Récipient de transport selon la revendication 1 *caractérisé en ce que* le cadre (14) comporte sur la face extérieure de deux côtés se faisant face deux rails, respectivement rainures longitudinales (24), et *en ce que* la plaque de fond (12) comporte sur chacun de ses chants extérieurs correspondants (18) un rebord (26) en forme de L dont une branche orientée vers l'intérieur s'engage par dessus le rail, respectivement dans la rainure (24), de façon à assurer la mobilité de la plaque de fond (12).

4. Récipient de transport selon les revendications 1, 2 ou 3 *caractérisé en ce que* le chant perpendiculaire avant (20) de la plaque de fond (12), qui est à engager en premier, est biseauté, respectivement aplati.

5. Récipient de transport selon l'une des revendications 1 à 4 *caractérisé en ce que* la plaque de fond (12) qui est retirable, est bloquée, pour prévenir son dégagement involontaire du cadre (14), grâce à des moyens de verrouillage pouvant être actionnés, respectivement des moyens de fixation amovibles, tels que des ergots d'arrêt, des cliquets, des boulons à ressort ou des moyens similaires.

6. Récipient de transport selon l'une des revendications 1 à 5 *caractérisé en ce que* pour prévenir toute ouverture non autorisée du récipient, la plaque de fond (12) retirable ou/et le couvercle supérieur peuvent être fermés, respectivement plombés, grâce à des moyens de plombage appropriés, tels que des broches d'écartement (28), une bande adhésive de scellage ou des moyens similaires.

7. Récipient de transport selon l'une des revendications 1 à 6 *caractérisé par* au moins un évidement, tels qu'une rainure perpendiculaire ou des alésages, prévus dans la face inférieure du cadre (14), dans lesquels peuvent s'engager, en vue d'une coopération par clabotage, des saillies correspondantes, tels qu'un rebord étroit s'élevant vers le haut (rail d'arrêt) ou des ergots d'arrêt ( tenons d'engagement) d'un plateau mince (tray) prévu en dessous, afin d'assurer la fixation longitudinale et perpendiculaire du récipient de transport (10) mis en place.
